# EUROPEAN PATENT APPLICATION

(11) **EP 1 236 642 A2**
(43) Date of publication of application: **04.09.2002**
(21) Application number: 02425091.2
(22) Date of filing: 20.02.2002
(51) Int. Cl.: B64D 11/06

(54) **Seat for an aircraft**

(30) Priority: 26.02.2001 IT RM010029
(71) Applicant: AVIOINTERIORS S.P.A., I-04013 Tor Tre Ponti Latina (IT)
(72) Inventor: Veneruso, Alberto, 04013 Tor Tre Ponti (LT) (IT)
(74) Representative: Iannone, Carlo Luigi

(57) **Abstract**

The invention concerns a seat (1), particularly for aircraft, comprising a body (2) having a substantially horizontal portion, containing the seat, and a substantially vertical portion, containing the seat back, characterised in that said substantially vertical body (2) portion can be moved backward. Furthermore, the seat (1) comprises two lateral panels (3), movable between two positions, respectively an opened and a closed position, and two arms (4), vertically movable between a lifted position and a lowered position, up to leaving the lateral space completely free.

## Description

The present invention concerns an improved seat, particularly for aircrafts.

More specifically, the invention concerns a seat of the above kind that allows to optimise the use of the same seat.

The solution suggested according to the present invention has been particularly studied for the "business" seats.

It is well known that in aircraft seat for the economic, business and in many cases first class are provided.

In order to obtain the best comfort, many technical solutions have been studied, particularly for business and first class. Obviously, it easier to find solutions for the first class seats, since the available space is really larger, while it is more difficult to obtain certain results for the business class seats.

In this context it is included the solution suggested according to the present invention, that allows to exploit in an optimum way the available space, particularly when the seat is reclined, up to reaching a "bed" position.

Main object of the present invention is that of providing a seat provided with a body having solutions able to allow the maximum exploitation of the available space, particularly when it is reclined.

Further object of the present invention is that of providing a solution allowing to exploit, if it is wished so, also the lateral space, providing a movable panel and the lowering of the arms, up to obtain their disappearing.

It is therefore specific object of the present invention an improved seat, particularly for aircrafts, comprising a body having a substantially horizontal portion, containing the seat, and a substantially vertical portion, containing the seat back, characterised in that said substantially vertical body portion can be moved backward.

Always according to the invention, said seat body provides two lateral panels, movable between two positions, an opened and a closed position, respectively.

Furthermore, according to the invention, said seat provides two arms, movable between a lifted position and a lowered position, up to leaving completely free the lateral space.

The present invention will be now described, for illustrative but not limitative purposes, according to its preferred embodiments, with particular reference to the figures of the enclosed drawings, wherein:
figure 1 is a first lateral view of a seat according to the invention;

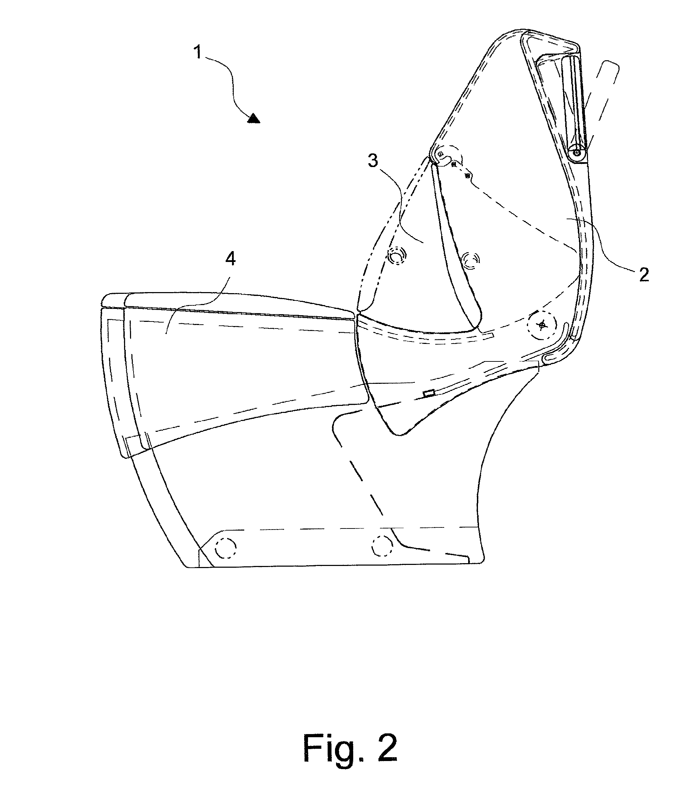

figure 2 is a second lateral view of a seat according to the invention; and
figure 3 is a third lateral view of a seat according to the invention.

Observing now the figures of the enclosed drawings, it is shown a solution according to the invention, particularly a business class seat 1, on the body of which some structural features are provided, allowing a better exploitation of the available space, particularly during the reclining phase, up to reaching the "bed" position.

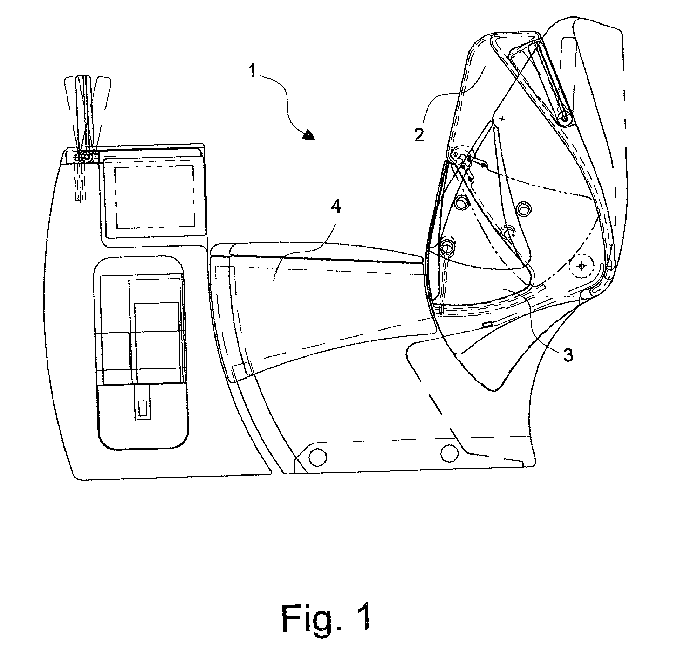

Particularly, observing figure 1, it can be noted that the body of seat 1 has a rear portion 2 that, during the reclining phase, moves backward, to allow the movement of the seat 1 caused by the activation of the suitable mechanism.

Obviously, every kind of reclining mechanism could be provided on the seat 1, and particularly the mechanism which is the subject matter of a separated patent application, filed on the same date of the patent present application by the same Applicant.

Furthermore, two movable panels are provided on the to sides of the seat 1.

When the seat 1 is completely reclined, shoulders of the passenger (not shown) are substantially at the height of the movable panel 3.

If it is wished, the opening of the panel 3 allows to obtain a larger space for the shoulders.

Instead, in case it is not wished to open the space, panels 3 are a privacy element.

Furthermore, seat 1 according to the present invention provides two arms that can be lowered, in order to obtain, if it is wished so, a space continuity with the other seat.

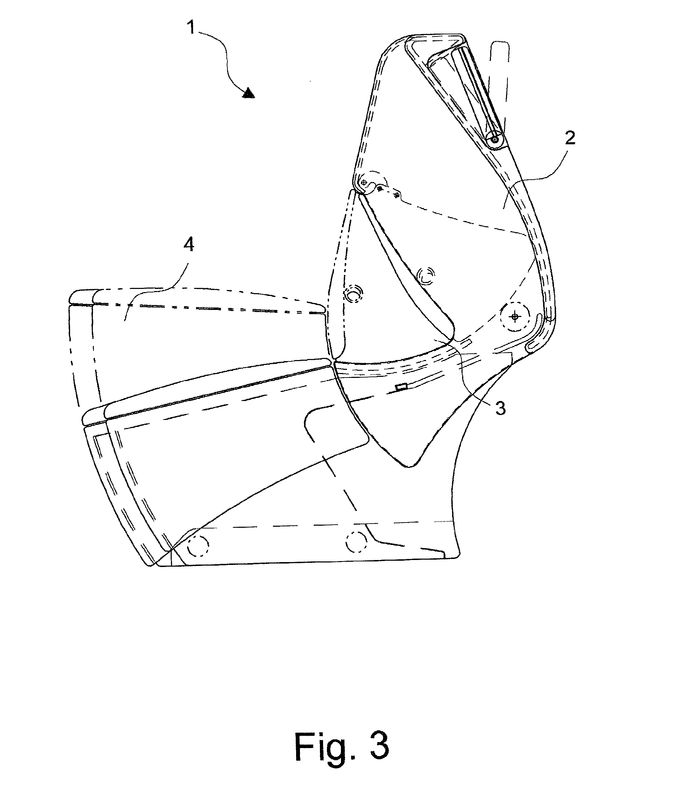

Arms 4 can be moved between the two positions shown in figure 3. By lowering the arm 4, the maximum available space is obtained, up to reaching, in case of need, for two seats placed side by side, a continuity solution.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Seat, particularly for aircrafts, comprising a body having a substantially horizontal portion, containing the seat, and a substantially vertical portion, containing the seat back, **characterised in that** said substantially vertical body portion can be moved backward.

2. Seat, particularly for aircrafts, according to claim 1, **characterised in that** said seat body provides two lateral panels, movable between two positions, an opened and a closed position, respectively.

3. Seat, particularly for aircrafts, according to one of the preceding claims, **characterised in that** said seat provides two arms, movable between a lifted position and a lowered position, up to leaving completely free the lateral space.

4. Seat, particularly for aircrafts, according to each one of the preceding claims, substantially as illustrated and described.
